# EUROPEAN PATENT SPECIFICATION

(11) **EP 0 748 727 B1**
(45) Date of publication and mention of the grant of the patent: **07.11.2001**
(21) Application number: 96500078.9
(22) Date of filing: 14.06.1996
(51) Int. Cl.: B60R 25/10, H04Q 7/38

(54) **Safety system for vehicles**
Sicherheitssystem für Fahrzeuge
Système de sécurité pour véhicules

(30) Priority: 15.06.1995 ES 9501205
(43) Date of publication of application: 18.12.1996
(73) Proprietor: SISTEMAS DE SEGURIDAD MANTENIMIENTO Y PREVENCION S.A., 28045 Madrid (ES)
(72) Inventor: Agrelo Ferrer, Tomás, 28009 Madrid (ES); Rodriguez Resco, José Antonio, 28430 Alpedrete, Madrid (ES)
(74) Representative: Elzaburu Marquez, Alberto

(56) References cited:
- EP-A- 0 242 099
- EP-A- 0 417 944
- EP-A- 0 652 542
- WO-A-92/14329
- WO-A-93/16452
- DE-U- 9 406 605

## Description

The present invention relates to safety systems and, more particularly, to systems for transmitting information from a vehicle confronted with emergency conditions to a control centre which allows it to locate the position of the vehicle in order to take the appropriate decisions, as per the preamble of claim 1. The system can be activated from the vehicle itself or else from the control centre.

Various systems of this sort are already known, which make it possible to locate the position of a vehicle, for example a stolen or crashed vehicle, making use of tracking systems which take advantage of data received from satellites - GPS receivers (acronym derived from the expression "Global Positioning System") -, by virtue of which it becomes possible to obtain extremely accurate data as to the position and speed of movement of a mobile, which can be transmitted through a given radio-transmitter device to a work station in which the information received is processed in an appropriate form.

One such system is disclosed in DE-U-9 406 605, according to which a stolen vehicle is located by using, in combination, the alarm device of the vehicle, a control unit of the location system installed in the vehicle, a GPS receiver also installed in the vehicle, a communications channel belonging to the GSM cellular telephone network, and a central station to process alarm data.

Another system of this kind is disclosed in WO-A-93 16452, wherein a fully automatic personal security system comprises a mobile unit, such as a vehicle, which communicates emergency data, including position coordinates provided by a GPS receiver, to a central dispatch station, which receives those data and accurately displays all necessary emergency information superposed on a digitized map at a position corresponding to the location of the mobile unit. The communication between the mobile unit and the central station is carried out with the aid of a cellular telephone or communication satellite.

A further system of this kind is disclosed in EP-A-0 652 542, where a security system for valuable movable equipment, such as ships, airplanes, automobiles, etc., comprises one or more stations to be alerted, which are provided with a telephone apparatus, and a number of mobile security devices arranged in the equipment to be protected, which are provided with a mobile telephone apparatus, control means for the same, a theft sensor, a GPS receiver for position information and a memory for storing information to be transmitted by way of the mobile telephone apparatus. The telephone communication between each station and the equipment is carried out through the GSM network.

Additionally, EP-A-0 242 099 describes an antitheft and locating system for movable objects, for instance vehicles, in which a microprocessor monitors the vehicle position by way of coordinates obtained from the GPS system. Upon activation, through sensing unauthorized manipulation of a vehicle, the microprocessor alerts a central station through a cellular mobile telephone system so that appropriate steps can be taken to cope with the sensed disturbance in the vehicle.

Also, the following European patent applications are cited as representative of the prior art: EP 0 512 789, EP 0 350 554, EP 0 559 074 and the PCT document WO 93/05490.

In these documents are described various alarm signal generator systems for vehicles, which are intended, from the GPS system, to obtain data relating to the position and speed of a vehicle, as well as data relating to time and date, and to transmit the said data to a central control station, generally by means of a radio link.

The systems described, having the common feature of using GPS systems to locate the position of a vehicle, vary according to the specific objectives of the system and according to the communications technique used to interchange information between the vehicle and the control centre.

Unlike what is described in the prior art, the system which is the subject of the present invention uses the GSM communications system as a transmission means between the mobile and the control centre, and is configured in such a way that its cost makes it viable for large-scale installation as a safety system for motor vehicles, which is an objective which is difficult to achieve with the known systems. More particularly, in the present invention, the SMS facility (Short Message Service) is used which the GSM communications system offers and which allows low-speed data transmission without the necessity of using network resources (no subscriber terminal channel being necessary), using solely the signalling system which has a reduced cost.

In consequence, the subject of the invention is the production of a system having the features of the characterizing part of Claim 1 and of claim 2 dependent on it, which implies installation and operation costs which are very much less than those of the systems of the prior art.

In what follows, a preferred embodiment of the invention will be described, making reference for that purpose to the attached drawings, in which:
Fig. 1 is a diagrammatic representation of the architecture of the system in accordance with the invention; Fig. 2 is a diagram which represents only the architecture of the unit which is to be mounted in a vehicle which incorporates the subject of the invention;

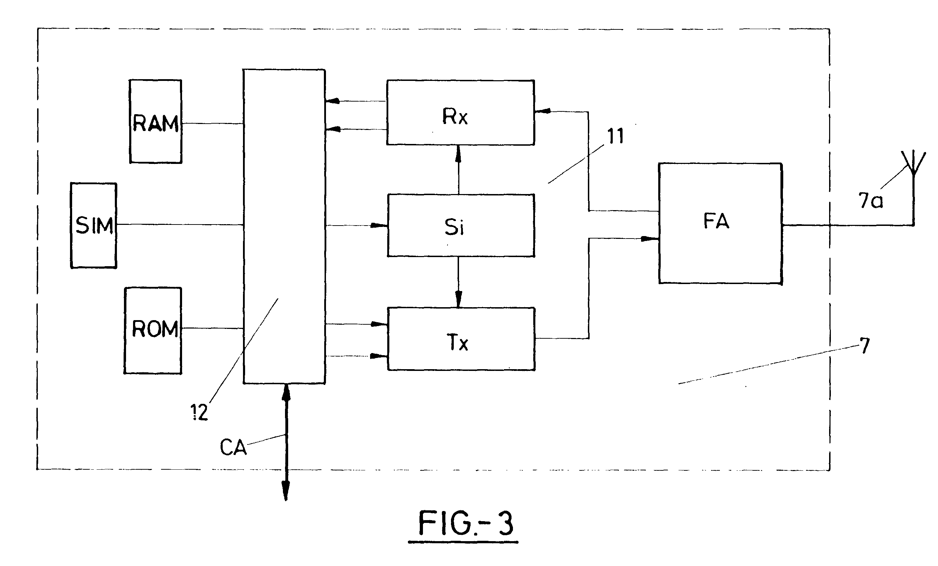

Fig. 3 is a diagram of the communications module; and
Fig. 4 diagrammatically represents the basic structure of the GSM network used in the system of Fig. 1.

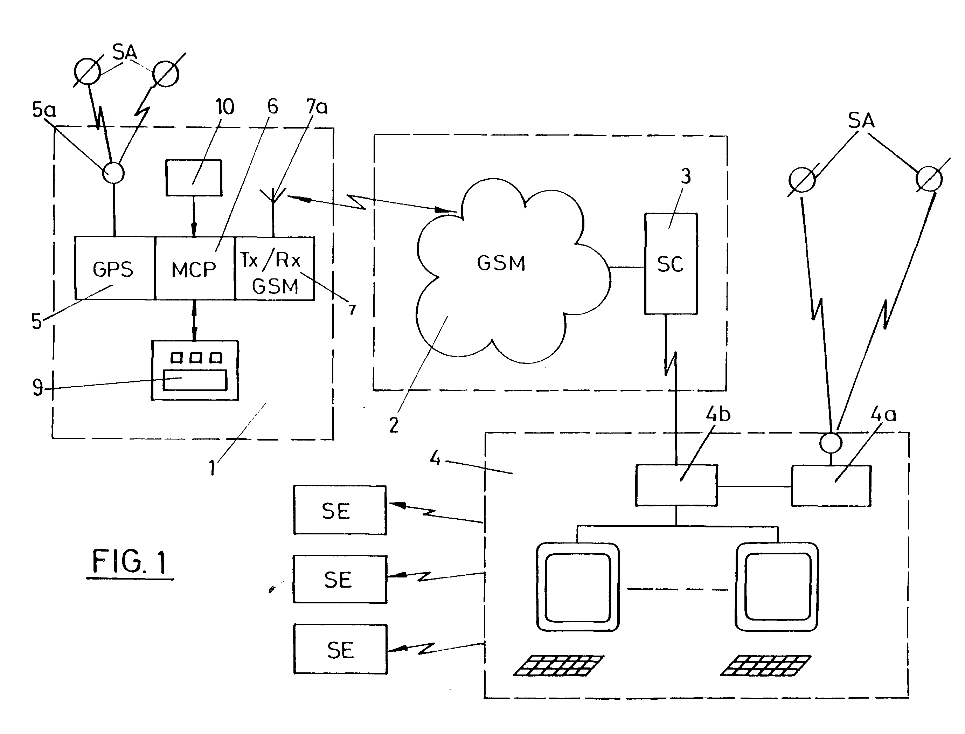

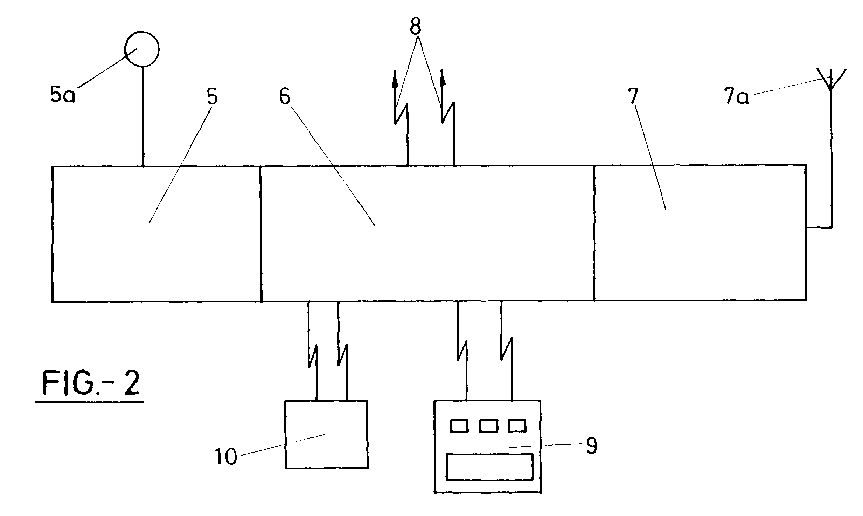

Referring now to the drawings, and in particular to Fig. 1 thereof, the unit to be installed in each vehicle (from now on VTU - Vehicle Terminal Unit -) is there designated overall as 1; a detailed description of the unit will be given later, referring to Fig. 2. The GSM mobile communications network is designated diagrammatically as 2, this network offering the short message service, which, as has been said, allows bidirectional low-speed data communication between the control centre 4 and the VTU via the centre 3, which is responsible for receiving and sending the short messages, from the VTU/control centre or control centre/VTU origin.

The satellites SA send coded digital signals which are received by the antenna 5a of the global positioning system (GPS) receiver. These same satellites are used in the service control centre 4 to generate reference signals which are received in the receiver 4a and sent to the communications manager 4b of the said centre for functions of adjustment and correction of the signals received from the VTUs in order to obtain a more precise position of the mobile from the GPS system.

From the control centre 4, which incorporates the vehicle location services, communications can moreover be set up with various services SE such as police, medical assistance and/or technical assistance.

Referring now to Fig. 2 of the drawings, the VTU is there represented installed in a vehicle which incorporates the system of the invention, and consisting of:
a) a GPS receiver 5, which comprises a receiving antenna 5a and a reception and control microcontroller (not illustrated), which supplies the positioning coordinates. This receiver can be of any commercially available type, being connected with the control and processing module 6 through a serial RS-232 channel;
b) a control and processing module (MCP) 6, intended to control the position determination element (GPS receiver) 5, as well as the communications means 7 (GSM module in short-message mode) which are used for information interchange with the Vehicle Location Service Control Centre (CCS). Moreover, this module 6 makes use of digital ports for reading and activation of signals, as well as of the corresponding additional expansion bus for peripherals, to which can be connected a printer 8, a presentation panel 9 (equipped with a small screen and with function keys), a portable computer and alarms 10 of any type; and
c) a communications module 7, based on a transmitter/receiver (Tx/Rx), which fulfils the function of interconnection with the GSM communications system 2, at the same time as it manages the transmission/reception of orders in short-message format; this communications module 7, equipped with an antenna 7a, consists of a radiofrequency unit 11, which fulfils the functions of antenna filter, receiver, transmitter, receiver and tuner (RX, TX, SI), and a processing and base band controller unit 12, which fulfils the function of channel coder/decoder and which incorporates the communications and protocol software which supports the functionality of the short-message service. This base band controller is connected, via an asynchronous channel CA, with the control and processing module 6.

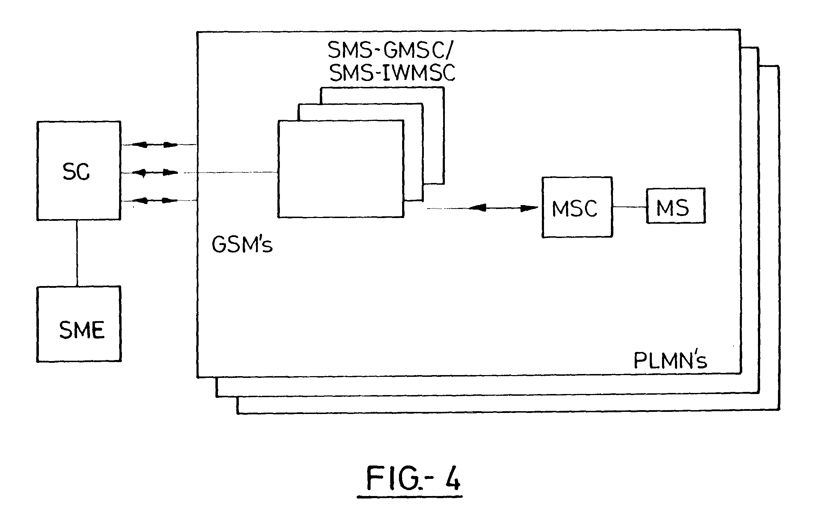

Moreover, in Fig. 4 is shown the basic structure of the GSM mobile communications network. The acronyms included in the said figure have the following meanings:
- MS -: Network terminal mobile station
- SMS -: Short-message (SM) transmission service
- SME -: Entity with the capacity for sending and receiving short messages. This can be located in the fixed network, on a mobile or at a short-message service centre
- SC -: System responsible for storing and distributing short messages between an SME and an MS
- MSC -: Mobile services switching centre
- PLMN -: Public mobile telephone network for land-based service

Moreover, means (SMS-GMSC) are provided for interconnecting with the service centre (SC) which are intended to support the short-message service which is terminated at the mobile, and others (SMS-IWMSC) which are intended to fulfil the function of interconnecting with the service centre (SC) for the purpose of supporting the short-message service for messages originating at the mobile.

Via the SMS service (Short Message Service) of the said network, a link is established for transmitting low-speed data between the Control Centre and the VTU which allows bidirectional transmission of information relating to the positioning and to the alarms generated in the said mobile unit from the latter to the said Control Centre in the form of messages of limited size; with the object of supporting this service, use is made of a Short Message Service Centre, designated as 3 in Fig. 1, which acts as a medium for storing and sending said short messages.

Consequently, the GSM network operates as an information transport system between the Service Centre and the VTUs.

Finally, the Control Centre 4 consists, at the operating level, of a communications manager 4b, a GPS receiver for reference signals 4a and a local area network to which the computers are connected (preferably personal computers with a high-throughput processor), which support the graphics screens of the operator stations, the network server computer which contains all the information databases, as well as the communications manager itself. The local area network uses Windows NT (registered trademark of Microsoft Corp.) as operating system.

At the functional level, the control centre consists of the following units:
- communications manager,
- presentation unit,
- administration unit.

The communications manager is tasked with managing the reception and the sending of data from and to the mobile units through the Short Message Service Centre, containing the administration unit and the information databases on the mobile units which are incorporated in the system.

For its part, the presentation unit contains the digitalized geographical data and covers an entire operational area, from the level of a street in a town to the level of national boundaries. The presentation system is designed with a windows architecture, so that an operator can view a geographical area in one area of the screen and, at the same time, follow the detailed movement of a vehicle on another map represented in another area of the same visual display screen.

The functions and architecture of the control and processing module (MCP), represented as 6 in Fig. 2, will now be described.

The functions carried out by the MCP are grouped together in the following way:
- initialization functions,
- testing of elements
- acquisition and response to messages from the Control Centre,
- main processing, and
- attending to the communications.

Initialization of submodules, modules and registers comprises the operations necessary to initialize the positioning submodule and the corresponding communications module, as well as the internal registers, making it possible to establish a defined state every time the MCP 6 is switched on. The said functions are activated every time the module is disconnected from the vehicle power supply and reconnected thereto, for the purpose of establishing the said situation with respect to the Service Control Centre; the first time a communication is set up with the abovementioned Centre, from the change to power supply active, a code is sent which signals the said situation.

The functions of testing and verification of the state of the elements makes it possible to obtain indications as to the operational state of the positioning and communication elements, as well as to establish the initial situation corresponding to the possible incidents which the said elements have (in particular the positioning submodule, since, given the characteristics of the GPS system, parameters have to be taken into account such as the number of satellites visible, reacquisition times, etc.). These functions can be activated automatically, after switching on the module, in a preferred embodiment of the invention.

The functions of acquisition of and response to messages from the Control Centre make it possible to check the validity of the messages received and to give a response to them. In this way, the messages received from the Service Control Centre are authenticated, and the response information is supplied corresponding thereto (fundamentally information relating to the state and to the position of the Control and Processing Module in one embodiment of the invention). For its part, the response information supplied incorporates identification of the Control and Processing Module.

The main processing functions make it possible, with the time delay set and under the programmed conditions (activation of the turn-on signal), to obtain the data relating to position and UTC time, as well as to store the said information in a memory.

Finally, management of the Communications Module (detection of calls and establishment/supervision thereof) covers the functions of handling the communications, by means of the corresponding serial port.

With the aim of achieving reduced production costs and, at the same time, having the necessary flexibility available to adapt the Control and Processing Module to the various customers' requirements, a microprocessor-based architecture has been selected for it, which incorporates a programme memory and data memory in the same integrated circuit, access to the outside world being guaranteed by means of the provision of two serial communications ports, as well as by a general-purpose transmission line (bus) for expansion, to which peripherals of the usual type can be connected (analogue-to-digital converters, digital or analogue signal multiplexers, sensors, etc.). A GPS submodule, which makes it possible to obtain high-precision timing and positioning information, is directly incorporated on this same line, in module 6.

The requirements which the selected architecture must satisfy are: capability of reprogramming functions by means of software; low production cost; industrial operating temperature range; identification of the module by means of non-copiable firmware, with the aim of avoiding pirating of modules; standard external communication channels (2 RS-232 channels); means for interconnection with positioning modules, with two capabilities for integration, either directly on the card, or by means of an RS-232 link; and, finally, it must be possible to use different communication elements through the serial port by virtue of the incorporation of the corresponding software module.

Among the applications of the system in accordance with the invention is the location of stolen vehicles. Activation of the system in this case can be carried out automatically, the electronic security system of the vehicle generating an alarm signal which is sent immediately to the Control Centre together with information relating to the vehicle's position. Obviously, the possibility exists of cancelling the alarm signal generation from the vehicle itself, in which case the customer's key is verified from the said Control Centre.

In this case, the automatic alarm 10 (Fig. 2) detects the incident (unauthorized operation of any of the sensor elements of the alarm system). As a consequence of the said detection, the module 10 (Fig. 2) sends, via the serial line, the code of the alarm generated to the control and processing module (MCP) 6, which produces a short message (160 information bytes) from the alarm code received, adding the positioning information (coordinates) at this precise instant (information received from the GPS receiver module 5) and the instantaneous timing information. The module 6 always includes, in each short message, fixed information consisting of the code of the VTU, the number of the short message service Centre and the number of the Control Centre, the final destination of the said short message.

Next, the module 6 sends the short message produced, through the asynchronous channel CA, to the module 7 (Fig. 2) (GSM transmitter/receiver). The said module 7 has the task of transmitting the short message, making use of the radio unit, through the GSM radio network infrastructure to the Short Message Service Centre (module 3 in Fig. 1) of the said GSM network, which, in its turn, sends the said message to the Control Centre 4 (Fig. 1).

The management application of the Control Centre sends a message to the VTU requesting continuous information on the positioning of the vehicle, so that the sequence which has just been described is repeated automatically every few seconds (a period fixed by the operator), until the operator himself orders the incident to be terminated.

From reception of the message which notifies the theft of the vehicle, the operator sets in train a series of actions such as calling the emergency services closest to the point at which the incident has taken place, calling the vehicle's owner, etc.

For example, the control centre, on receiving the alarm signal, routes it to the first free work station, at the same time giving a visual and audible alarm until the operator responds. The operator can then watch the situation of the vehicle on the screen, and continue to monitor it, while, in another region of the screen, the data relating to the customer's identification appear, including, for example, a photograph of the vehicle.

Moreover, on the same screen, the operator may have additional information available, relating, for example, to home addresses of the customer close to the alarm, a historical record of action taken or the location of nearby stations of the emergency services.

The alarm message generation can also be performed remotely. For example, an incident may be generated by a telephone call from the vehicle's owner.

In this case, when it is the owner who has detected the theft of the vehicle, he gets in touch with the Control Centre, informing it of the incident. The operator first of all checks the identification code of the person who is calling (with the aim of guaranteeing the validity of the incident), sending a message to the corresponding VTU, if the check proves positive, requesting continuous information on the positioning of the vehicle.

From this moment, the sequence described above is repeated, the VTU sending a short message with the positioning information at a rate fixed by the operator.

A variation of this mode is the requesting, on the part of the user or of an authorized person, of the location of the vehicle.

In another application of the system of the invention, the alarm can be generated manually by the driver of a vehicle by means of a device which is not visible. In this case, the driver pushes a button (theft alarm, medical emergency, breakdown, etc.) on the panel 9 (Fig. 2).

As a consequence of the said button being pushed, the module 9 (Fig. 2) sends the code of the alarm generated, via the serial line, to the control and processing module (MCP) 6, which produces a short message (160 information bytes) from the alarm code received, adding the positioning information (coordinates) at this precise instant (information received from the GPS receiver module 5) and the instantaneous timing information. The module 6 always includes, in each short message, fixed information consisting of the code of the VTU, the number of the short message service Centre and the number of the Control Centre, the final destination of the said short message.

Next, the module 6 sends the short message produced, through the asynchronous channel CA, to the module 7 (Fig. 2) (GSM transmitter/receiver). The said module 7 has the task of transmitting the short message, making use of the radio unit, through the GSM radio network infrastructure to the Short Message Service Centre (module 3 in Fig. 1) of the said GSM network, which, in its turn, sends the said message to the Control Centre 4 (Fig. 1).

The management application of the Control Centre sends a message to the VTU requesting continuous information on the positioning of the vehicle, so that the sequence which has just been described is repeated automatically every few seconds (a period fixed by the operator), until the operator himself orders the incident to be terminated.

Whatever the origin of the alarm message, the Control Centre operator carries out a series of actions which will depend on the type of alarm received, for example, communication with the emergency services closest to the site of the incident, if the alarm received corresponds to attempted theft or assault; connection with medical or ambulance centres closest to the incident if the alarm received corresponds to a medical emergency, or a call to the closest technical assistance centre if the alarm corresponds to technical assistance. In every case, the operator sends a message to the driver, with the action taken, a message which will be presented on the screen of module 9 (Fig. 2).

Finally, the action taken can be permanently archived, the application possibly remaining optionally on hold until a further call is received.

Other applications include, for example, a call for technical or medical assistance, in the event of a breakdown or an accident, the alarm message then being sent to the control centre by means of pushing a button on the unit mounted in the vehicle, and the response from the said control centre including the location of nearby medical centres or technical services, respectively, and/or advice to assistance or emergency vehicles, etc.

For their part, the databases managed in the control centre can contain data relating to characteristics and data of the vehicle and of the user of the system, data relating to persons authorized by the user, addresses, telephone numbers of emergency services, historical data of action taken, assistance vehicles, technical services, etc.

Although with the embodiment described the basic usefulness of the invention is related to safety, the term being understood in the wide sense, the invention is also applicable for purposes such as route optimization, management of fleets of vehicles, making it possible to track any of them continuously or at intervals. It has already been said, in this context, that the Control and Processing Module is intended to interact with various types of peripherals giving the system great versatility in adapting to various uses.

## Claims

1. Safety system for vehicles which uses a GPS receiver module for locating the position of the vehicle, comprising:
1) a device (1) situated in the vehicle which sends/receives digital messages to/from a control centre (4) via the GSM communications system (2), said device (1) including:
a) a GPS receiver module (5), and
b) a communications module (7) for transmitting the position of the vehicle to said control centre (4) as obtained from said GPS receiver module (5), either in response to a message from said control centre (4) or by activation of alarm means (10) situated in the device (1); and
2) means (4a, 4b) situated in the control centre (4) which make it possible to obtain the relevant information from the vehicles and the geographical area covered by the system, and its processing together with the information received/transmitted from/to each vehicle,
**characterized in that** said device (1) further comprises:
c) a control and processing module (6) for controlling the operation of said GPS receiver module (5), processing the positional information on the vehicle supplied by said GPS receiver module (5) in a form suitable for digital transmission thereof, receiving/transmitting information from/to devices for automatic processing of information and from sensor devices connected to the system, and generating brief data messages in response to possible alarm conditions in the vehicle, said control and processing module (6) being connected to said communications module (7) in an asynchronous mode (CA) so that the latter transmits/receives information to/from said control centre (4), in the form of the brief data messages generated by the control and processing module (6), via the short message service (SME) of the GSM network, using the support of a short message service centre (SC) of the GSM network for storing and distributing said short messages.

2. Safety system for vehicles, according to claim 1, **characterized in that** the means (4a, 4b) situated in the control centre (4) comprise a computer system which processes the information received/transmitted from/to the vehicles and that recovered from databases with information on the range of vehicles incorporated in the system and on the geographical area covered by the system, and which includes an interconnection which allows the operator of the control centre (4) to carry out the actions (services SE) scheduled for each safety function provided by the system.

## Patentansprüche

1. Sicherheitssystem für Fahrzeuge, mit einem GPS-Empfangsmodul für die Ortung der Fahrzeugposition, das folgendes umfasst:
1) eine im Fahrzeug angeordnete Vorrichtung (1), die über das GSM Kommunikationssystem (2) digitale Botschaften zu/von einem Kontrollzentrum (4) sendet/empfängt, wobei diese Vorrichtung (1) folgendes umfasst:
a) ein GPS-Empfangsmodul (5), und
b) ein Kommunikationsmodul (7), um die Position des Fahrzeugs an das genannte Kontrollzentrum (4) zu übermitteln, so wie diese vom genannten GPS-Empfangsmodul (5) empfangen wird, entweder in Antwort auf eine von dem genannten Kontrollzentrum (4) kommende Botschaft oder aufgrund der Aktivierung von Alarmmitteln (10), die in der Vorrichtung (1) angeordnet sind; und
2) im Kontrollzentrum (4) angeordnete Mittel (4a, 4b), die es ermöglichen, die relevante Information von den Fahrzeugen und dem vom System gedeckten geographischen Bereich zu erhalten, sowie diese zusammen mit der von/zu den jeweiligen Fahrzeugen empfangenen/gesendeten Informationen zu verarbeiten,
**dadurch gekennzeichnet, dass** die genannte Vorrichtung (1) ausserdem folgendes umfasst:
c) ein Kontroll- und Verarbeitungsmodul (6) für die Kontrolle der Betätigung des genannten GPS-Empfangsmoduls (5), die Verarbeitung der von dem genannten GPS-Empfangsmodul (5) erhaltenen Information über die Position des Fahrzeugs, damit diese für eine digitale Übertragung geeignet ist, das Empfangen/Senden der Information von/zu Vorrichtungen für die automatische Informationsverarbeitung, sowie von Sensorvorrichtungen, die an das System angeschlossen sind, und die Erstellung von kurzen Datenbotschaften als Reaktion auf mögliche Alarmbedingungen im Fahrzeug, wobei das genannte Kontroll- und Verarbeitungsmodul (6) mit dem genannten Kommunikationsmodul (7) synchron (CA) geschaltet ist, so dass letzeres die Information zu/von dem genannten Kontrollzentrum (4) sendet/empfängt, in Form von kurzen Datenbotschaften, die von dem Steuer- und Verarbeitungsmodul (6) erstellt werden, über den Kurzbotschaftsservice (SME) des GSM-Netzes, wobei der Träger eines Zentrums (SC) für Kurzbotschaftsservice des GSM-Netzes verwendet wird, um die Kurzbotschaften zu speichern und zu verteilen.

2. Sicherheitssystem für Fahrzeuge nach Anspruch 1, **dadurch gekennzeichnet, dass** die im Kontrollzentrum (4) angeordneten Mittel (4a, 4b) ein Computersystem umfassen, das die von/zu den Fahrzeugen empfangenen/gesendeten Information verarbeitet, sowie die von Datenbanken geholte, die Information über die in dem System aufgenommene Reihe von Fahrzeuge und den von dem System gedeckten geographischen Bereich enthält, und das eine Verbindung umfasst, die es dem Bediener des Kontrollzentrums (4) ermöglicht, geplante Aktionen (Services SE) für jede von dem System gebotene Sicherheitsfunktion durchzuführen.

## Revendications

1. Système de sécurité pour véhicules, utilisant un module récepteur GPS pour la localisation de la position du véhicule, comprenant:
1) un dispositif (1) situé dans le véhicule, envoyant/recevant des messages digitaux à/depuis un centre (4) de contrôle à travers du système (2) de communications GSM, ledit dispositif (1) incluant:
a) un module (5) récepteur GPS, et
b) un module (7) de communications pour transmettre la position du véhicule audit centre (4) de contrôle selon elle est obtenue à partir dudit module (5) récepteur GPS, soit en réponse à un message provenant dudit centre (4) de contrôle, soit par l'activation de moyens (10) d'alarme situés dans le dispositif (1); et
2) des moyens (4a, 4b) situés au centre (4) de contrôle, faisant possible l'obtention de l'information importante à partir des véhicules et de l'aire géographique couverte par le système, ainsi que son traitement avec l'information reçue/transmise depuis/à chaque véhicule,
**caractérisé en ce que** ledit dispositif (1) comprend aussi:
c) un module (6) de contrôle et de traitement pour contrôler l'activité dudit module (5) récepteur GPS, traiter l'information positionnelle du véhicule fournie par ledit module (5) récepteur GPS, sous forme appropriée pour la transmission digitale de celle-ci, recevoir/transmettre de l'information depuis/à des dispositifs pour le traitement automatique d'information et depuis des dispositifs capteurs connectés au système, et générer des messages courts de données en réponse à des possibles conditions d'alarme dans le véhicule, ledit module (6) de contrôle et de traitement étant connecté audit module (7) de communications en mode synchrone (CA), de façon que ce dernier transmet/reçoit de l'information à/depuis ledit centre (4) de contrôle, sous forme de messages courts de données générés par le module (6) de contrôle et de traitement, à travers le service (SME) de messages courts du réseau GSM, en utilisant le support d'un centre (SC) de service de messages courts du réseau GSM pour stocker et distribuer lesdits messages courts.

2. Système de sécurité pour véhicules, selon la revendication 1, **caractérisé en ce que** les moyens (4a, 4b) situés au centre (4) de contrôle comprennent un système informatique traitant l'information reçue/transmise depuis/aux véhicules, et celle qui est récupérée depuis des bases de données avec de l'information sur la gamme de véhicules incorporés au système et sur l'aire géographique couverte par le système, et comprenant une interconnexion qui permet que l'opérateur du centre (4) de contrôle réalise des actions (services SE) plannifiées pour chaque fonction de sécurité fournie par le système.
